(19) **Europäisches Patentamt / European Patent Office / Office européen des brevets**

(11) **EP 1 729 353 B1**

(12) **FASCICULE DE BREVET EUROPEEN**

(45) Date de publication et mention de la délivrance du brevet:
**16.07.2008 Bulletin 2008/29**

(51) Int Cl.:
***H01L 41/09*** *(2006.01)*

(21) Numéro de dépôt: **06114463.0**

(22) Date de dépôt: **24.05.2006**

(54) **Perfectionnement aux materiaux de friction**

Verbesserung von Reibungsmaterialien

Improvement of friction materials

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **31.05.2005 FR 0505475**

(43) Date de publication de la demande:
**06.12.2006 Bulletin 2006/49**

(73) Titulaire: **SAGEM DEFENSE SECURITE**
**75015 Paris (FR)**

(72) Inventeurs:
• **D'Almeida, Oscar**
**92100, BOULOGNE BILLANCOURT (FR)**
• **Woydt, Mathias**
**D-12203 Berlin (DE)**
• **Audren, Jean-Thierry**
**78470, SAINT REMY LES CHEVREUSES (FR)**

(74) Mandataire: **Callon de Lamarck, Jean-Robert et al**
**Cabinet Régimbeau**
**20, rue de Chazelles**
**75847 Paris cedex 17 (FR)**

(56) Documents cités:
**WO-A-92/08909**    **DE-A1- 3 640 212**
**FR-A- 2 402 532**    **FR-A- 2 552 182**
**FR-A- 2 819 650**    **US-A- 4 269 903**

**Description**

DOMAINE TECHNIQUE GENERAL

L'invention concerne un actionneur mécanique comportant un piston linéaire actif, notamment à piston en matériau piézo-électrique.

De tels actionneurs trouvent avantageusement applications pour les dispositifs de freinage, d'embrayages ou de volets, notamment pour les véhicules automobiles ou les aéronefs.

ETAT DE L'ART

On connaît déjà, notamment par la demande FR 2 702 895, des actionneurs actifs qui comportent une chemise de coulissement et un piston apte à se déplacer axialement dans ladite chemise, ledit piston comportant une pluralité de tronçons successifs en matériaux actifs, et notamment en matériaux piézo-électriques. Généralement, les tronçons de ces actionneurs sont commandés les uns pour se dilater perpendiculairement au sens de déplacement du piston et ainsi se bloquer dans la chemise de coulissement, les autres pour se dilater selon la direction de déplacement et ainsi s'allonger pour provoquer le déplacement d'une partie du piston, tandis que l'autre partie est bloquée dans la chemise de coulissement.

Les actionneurs à piston actif doivent être particulièrement performants et présenter des durées de vie suffisamment importantes, pour pouvoir être utilisés notamment dans des dispositifs de freinage ou d'embrayage de véhicules automobiles ou d'aéronefs. A titre d'exemple, un dispositif de freinage d'automobile doit pouvoir résister à 1 million d'actionnements.

La force d'actionnement d'un actionneur dépend de la force de blocage multipliée par le coefficient de frottement. On comprend aisément alors que plus le coefficient de frottement est grand, plus la force d'actionnement est grande pour une même force de blocage.

La difficulté est qu'en frottement à sec, les matériaux de friction avec des coefficients supérieurs à 0,6, voir à 0,8, sous une pression géométrique d'environ 50 MPa, sont sujets à l'adhésion (soudure des microaspérités). Dans le cas où les matériaux de friction adhèrent, l'actionneur ne fonctionne plus. Par contre, les matériaux de frottement à sec qui ne sont pas sujets à l'adhésion présentent des coefficients inférieurs à 0,4 ou inférieurs à 0,3, même basse de 0,005, qui ne suffisent pas pour une grande efficacité de l'actionneur.

L'actionneur proposé par FR 2 819 650 présente des matériaux et/ou des couches de friction avec des coefficients de frottement supérieurs à 0,6 indépendamment de l'humidité relative, de la température et de l'environnement atmosphérique d'utilisation.

Pour obtenir ce résultat, la chemise de coulissement de l'actionneur et le piston présentent à leur interface au moins un couple de couches de friction, ledit couple de couches de friction présentant des coefficients de frottement statiques et dynamiques qui, pour une contrainte entre la chemise et le piston inférieure à 100 MPa, préférentiellement 50 MPa, sont supérieurs à 0,6. Le couple de couches de friction présente en outre des états de surface tels que :

- leur rayon de courbure d'aspérités R vérifient

$$0.005\text{mm} << R << 1\text{mm},$$

et
- les longueurs d'onde arithmétique moyenne $\lambda a$ et quadratique moyenne $\lambda q$ des aspérités vérifient

$$0.5\mu\text{m} < \lambda a \text{ et } \lambda q < 10\mu\text{m}.$$

Dans ces conditions, et avec les états de surface tels que définis par FR 2 819 650, les matériaux des couches de friction utilisés en frottement à sec ne subissent pas d'adhésion et pas d'abrasion.

L'actionneur proposé par FR 2 819 650 permet d'atteindre des taux d'usure particulièrement faibles, et notamment des taux d'usure inférieurs à $10^{-7}$ voire $10^{-8}$ mm$^3$/Nm.

Les matériaux décrits dans FR 2 819 650 sont préférentiellement choisis parmi :

- un oxyde de zircone ($ZrO_2$) stabilisé par < 8% en poids de MgO, ou < 13-16% de $CeO_2$, en phases monoclinique, tétragonale et/ou cubique ;
- un phase magnéli de l'oxyde de titane $\gamma$-$Ti_3O_5$ et/ou $Ti_nO_{2n-1}$, avec $4 \leq n \leq 10$; ou
- un alliage d'aluminium nitruré, par exemple du AlSi9 jusqu'au AlSi17 (alliages AA 6xxx ou alliages AlMgX, X représentant un ou plusieurs métaux, AA 5xxx...).

Un système de freinage est un système de sécurité qui doit toujours fonctionner, dans n'importe quelle condition.

Or il a été constaté que les matériaux précédemment cités, à l'exception du $CeO_2$ et du $ZrO_2$, présentent une hydrolyse sous certaines conditions.

Par exemple, les phases magnéli $Ti_nO_{2n-1}$, avec $4 \leq n \leq 10$, s'oxydent au-dessus de 360°C en présence d'air pour donner la phase stoechiométrique $TiO_2$. Ce phénomène d'oxydation s'accélère en présence d'humidité.

Par exemple encore, la stabilité hydrolytique de la phase tétragonale de l'oxyde de zircone stabilisé par $Y_2O_3$ (ce dernier matériau étant également appelé Yttria) n'est pas satisfaisante. En effet, le zirconia (autre nom de l'oxyde de zircone stabilisé par $Y_2O_3$) est sensible à l'eau et à la vapeur, de sorte que la phase tétragonale est déstabilisée par la formation de $Y(OH)_3$ et se transforme en phase monocline.

Par exemple enfin, les alliages d'aluminium nitrurés cités dans FR 2 819 650 sont également hydrolysés en présence d'eau ou de vapeur sous certaines conditions de températures pour former de l'alumine, des hydrates et/ou hydroxydes d'alumine, qui possèdent des propriétés lubrificatrices.

L'hydrolyse de ces matériaux engendre une baisse des performances qui est incompatible avec la durée de vie d'un aéronef et la sécurité souhaitée pour les actionneurs.

PRESENTATION DE L'INVENTION

L'invention propose de pallier au moins un des inconvénients précités.

A cet effet, l'invention propose un actionneur comportant une chemise de coulissement et un piston qui comporte une pluralité de tronçons en un matériau actif, des moyens de commande étant aptes à agir sur lesdits matériaux pour que les tronçons se bloquent par rapport à la chemise de coulissement ou s'allongent selon une séquence qui entraîne le déplacement axial du piston dans la chemise de coulissement, la chemise de coulissement et le piston présentant à leur interface au moins un couple de couches de friction, caractérisé en ce que qu'au moins une couche de friction est en un matériau choisi parmi :

- un oxyde d'un alliage de Ti et de Cr, l'oxyde étant sous forme d'une solution solide stabilisée et/ou sous forme d'une solution solide non-stoechiométrique ;
- une matrice de zircone stabilisée par du $Sc_2O_3$ et/ou $Al_2O_3$ et/ou $Cr_2O_3$ ;
- un oxyde de zircone en phase tétragonale stabilisé par du $Y_2O_3$, la taille des grains de l'oxyde étant inférieure à 100 nm ; et/ou
- une quelconque combinaison possible de ces matériaux.

L'invention est avantageusement complétée par les caractéristiques suivantes, prises seules ou selon leurs combinaisons possibles :

- ledit couple de couches de friction présente des coefficients de frottement statiques et dynamiques qui, pour une contrainte entre la chemise et le piston inférieure à 100 MPa, sont supérieurs à 0,6, ledit couple de couches de friction présentant en outre des états de surface tels que :

- leur rayon de courbure d'aspérités R vérifie

$$0.005 \text{ mm} << R << 1 \text{ mm},$$

et
- les longueurs d'onde arithmétique moyenne $\lambda a$ et quadratique moyenne $\lambda q$ des aspérités vérifient

$$0.5 \text{ μm} < \lambda a \text{ et } \lambda q < 10 \text{ μm}.$$

- au moins une couche de friction présente un état de surface dont le rayon de courbure R des aspérités vérifie :

$$0.03 \text{ mm} < R < 1 \text{mm}.$$

- ledit couple de couches de friction présente des coefficients de frottement statiques et dynamiques qui, pour une contrainte entre la chemise et le piston inférieure à 100 MPa, sont supérieurs à 0,6, ledit couple de couches de friction présentant en outre des états de surface tels que :
- le gradient arithmétique $\Delta a$ ou quadratique $\Delta q$ vérifient :
  $0.005° < (\Delta a, \text{ ou } \Delta q) < 0.5°$, et
- les longueurs d'onde arithmétique moyenne $\lambda a$ et quadratique moyenne $\lambda q$ des aspérités vérifient

$$0.5 \text{ μm} < \lambda a \text{ et } \lambda q < 10 \text{ μm}.$$

- une couche de friction a une épaisseur inférieure à 100 μm, et préférentiellement comprise entre 4 et 6 μm ;
- la solution solide stabilisée de l'oxyde de l'alliage de Ti et de Cr se présente sous la forme $Ti_{n-2}Cr_2O_{2n-1}$ avec $6 \leq n \leq 9$ ;
- la forme non-stoechiométrique de l'oxyde de l'alliage de Ti et de Cr se présente sous la forme d'une solution solide de $TiO_2$ et $Cr_2O_3$, préférentiellement sous une forme choisie parmi : $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ ou $Cr_{0,46}Ti_{0,54}O_{1,77}$.
- la matrice de zircone comporte entre 0.5 et 13% en nombre de moles de $Sc_2O_3$ et/ou entre 0.1 et 0.9% en poids de $Al_2O_3$ et/ou $Cr_2O_3$.
- la chemise de coulissement est en alliage de Al, de Fe et d'au moins un autre élément, l'alliage comportant au moins sensiblement 80% en poids d'Al et au moins entre 0.1 et 15.0% en poids de Fe ;
- l'alliage de Al, de Fe et d'au moins un autre élément est choisi parmi :
- un alliage Al-Fe-V-Si, avec entre 0,1 et 15% en poids de Fe, entre 0,3 et 15% en poids de V, entre 0,1 et 5% en poids de Si, le reste étant du Al, l'alliage étant préférentiellement l'alliage AA 8009, à savoir Al-8,5Fe-1,3V-1,7Si ; et/ou
- un alliage Al-Fe-Ce, avec entre 0,1 et 15 % en poids de Fe, entre 0,1 et 9 % en poids de Ce, le reste étant du Al, l'alliage étant préférentiellement l'alliage Al-8,3Fe-4,0Ce et/ou Al-7,0Fe-6,0Ce ; et/ou
- un alliage Al-Fe-V, avec entre 0,1 et 15 % en poids de Fe, entre 0,1 et 5 % en poids de V, le reste étant du Al, l'alliage étant préférentiellement l'alliage Al-12Fe-3V ; et/ou
- un alliage Al-Fe-Mo, avec entre 0,1 et 15 % en poids de Fe, entre 0,3 et 9 % en poids de Mo, le reste étant du Al, l'alliage étant préférentiellement l'alliage Al-8Fe-2Mo ; et/ou
- un alliage Al-Fe-Cr-Ti, avec entre 0,5 et 10 % en atomes de Fe, entre 0,4 et 8% en atomes de Cr, entre 0,3 et 5% en atomes de Ti, le reste étant du Al, l'alliage étant préférentiellement l'alliage Al84,5Fe7Cr6,3Ti2,5;
- l'alliage présente des grains affinés et homogénéisés et comporte une quantité inférieure à 0,3 % en poids par rapport au poids total de l'alliage de Mg, Zr, Ce et/ou Sr (inoculation) et/ou une quantité inférieure à 0,05 % en poids de Ni ;
- l'alliage comporte du nitrure d'aluminium ou de silicium pour obtenir un alliage contenant jusqu'à 2% en poids d'azote.

L'invention présente de nombreux avantages.

Notamment, l'actionneur présente de meilleures performances et une durée de vie augmentée du fait de la résistancce des matériaux de friction à l'humidité, à l'eau et/ou la vapeur, sur des plages de températures plus grandes.

L'actionneur peut être utilisé sur des gammes de températures et de pressions plus larges et plus élevées, pendant plus de temps.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 est une coupe longitudinale d'un mode de réalisation de l'invention ;
- la figure 2 est une coupe transverse d'un mode de réalisation de l'invention ;
- la figure 3 est une coupe transverse d'un autre mode de réalisation de l'invention ;

- la figure 4 représente l'évolution du coefficient de frottement du couple alumine/$Ti_2Cr_2O_7$ pour trois humidités relatives (3%, 49.8% et 99.7%) en mode d'oscillation jusqu'à $10^6$ cycles ;
- la figure 5 représente des valeurs des coefficients de frottement sous différentes humidités relatives en mode d'oscillation non lubrifié après $10^6$ cycles ;
- la figure 6 représente le taux d'usure de différentes phases magnéli et du $Ti_2Cr_2O_7$ sous différentes humidités relatives en mode d'oscillation non lubrifié après $10^6$ cycles ; et
- la figure 7 représente une compilation des taux d'usure en fonction du coefficient de frottement (COF) à sec de différents couples céramiques en mode d'oscillation non lubrifié.

## DESCRIPTION DETAILLEE

### STRUCTURE GENERALE

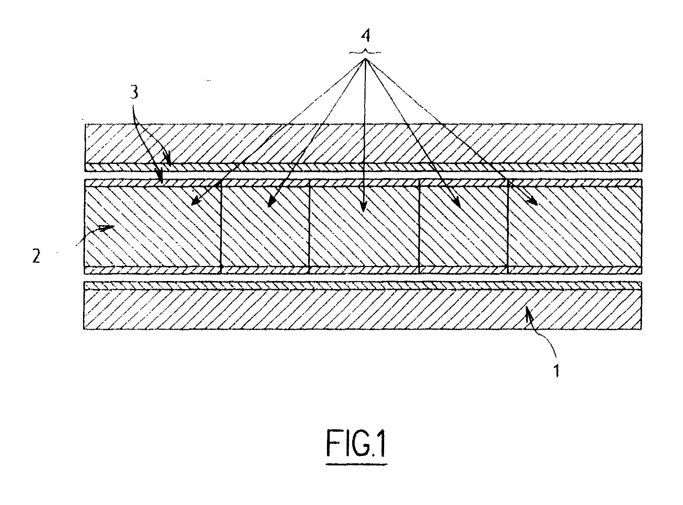

Le document FR 2 800 028 auquel on pourra avantageusement se référer, divulgue un actionneur tel qu'illustré sur la figure 1. L'actionneur comporte un cylindre ou une chemise de coulissement 1 et un piston 2 apte à coulisser axialement dans ledit cylindre 1.

Le piston 2 peut être constitué d'une pluralité de tronçons de céramiques piézo-électriques 4.

Chaque tronçon 4 est pourvu d'électrodes (non représentées sur la figure 1) qui permettent de le commander indépendamment des autres. Les tronçons 4 sont par exemple en céramique multicouches ou en céramique monolithiques ou monocristaux, l'utilisation de céramique piézoélectriques en multicouches présentant toutefois l'avantage de permettre d'utiliser des tensions électriques de commande réduites. Les électrodes permettent de commander lesdits tronçons 4 pour soit les dilater transversalement pour qu'ils se bloquent par frottement sur le cylindre de coulissement 1, soit les allonger. Les tronçons sont actionnés selon des séquences de fonctionnement alternant blocage et allongement de façon, soit à déplacer le piston, soit, lorsque celui-ci est en butée, à engendrer une force, qui est par exemple utilisée comme force de freinage.

Des couches de matériaux de friction, référencées par 3, recouvrent totalement ou en partie la chemise 1 et le piston 2.

On s'intéresse ci-après au choix de ces matériaux, ainsi qu'aux techniques utilisées pour leur dépôt, leur usinage, et leur état de surface.

### CHOIX DES MATERIAUX DE FRICTION

Les matériaux des couches 3 sont mis en contact et en frottement à sec dans le tribosystème que constitue la chemise 1 et le piston 2.

Ces matériaux sont choisis de façon à ce que ce tribosystème présente un coefficient de frottement (COF) particulièrement élevé et notamment supérieur à 0.6, préférentiellement supérieur à 0.8, et ce quelle que soit la variation des paramètres d'opération, ces paramètres étant principalement :

- l'humidité relative ;
- les sels corrosifs utilisés pour le dégel des routes et pistes ainsi que les polyglycols pour le dégivrage des avions ;
- la température entre qui pour certaines applications peut varier de -40°C (-60 C, aéronefs) à 200 ou 300°C ;
- les pressions géométriques (non hertziennes) de contact qui peuvent atteindre 50 MPa.

On sait que les matériaux qui sont classiquement utilisés comme matériaux de friction à coefficient de frottement élevé dans les tribosystèmes en frottement à sec présentent des taux d'usure importants (supérieurs à $10^{-6}mm^3$ /Nm) associés au mécanisme d'usure de l'adhésion.

Réciproquement, les matériaux classiquement connus en frottement à sec pour présenter des taux d'usure faibles ne sont généralement pas des matériaux de friction : il s'agit au contraire généralement de lubrifiant solide ou des tribosystèmes lubrifiés par des huiles liquides ou pâteuses ajoutées aux matériaux.

Les matériaux qui sont utilisés pour les couches 3 de la structure proposée ont comme caractéristique de présenter à la fois un coefficient de frottement important et un faible taux d'usure.

Leur taux d'usure en frottement à sec est en effet inférieur à $10^{-7}mm^3$/Nm et préférentiellement inférieur à $3x10^{-8}mm^3$/Nm, ce qui correspond normalement au régime de lubrification mixte/limite.

Ces taux d'usure très faibles permettent de garantir une durée de vie du système mécanique d'environ 15 ans, et ce pour un fonctionnement dans les conditions les plus défavorables. Cette durée de vie correspondrait en effet à une augmentation du jeu entre une chemise et un piston actif inférieure à 4 $\mu$m pour un piston de 25.4 mm de diamètre, et ce pour un million d'actionnements avec des pressions géométriques de contact de 50 MPa.

Les matériaux utilisés pour les couches de friction 3 sont avantageusement choisis parmi les matériaux suivants.

- un oxyde d'un alliage de Ti et de Cr, l'oxyde étant sous forme d'une solution solide stabilisée et/ou sous forme d'une solution solide non-stoechiométrique ;
- une matrice de zircone stabilisée par du $Sc_2O_3$ et/ou $Al_2O_3$ et/ou $Cr_2O_3$ ;
- un oxyde de zircone en phase tétragonale stabilisé par du $Y_2O_3$, la taille des grains de l'oxyde étant inférieure à 100 nm.

La solution solide stabilisée de l'oxyde de l'alliage de Ti et de Cr se présente préférentiellement sous la forme $Ti_{n-2}Cr_2O_{2n-1}$ avec $6 \leq n \leq 9$.

La forme non-stoechiométrique de l'oxyde de l'alliage de Ti et de Cr se présente préférentiellement sous la forme d'une solution solide de $TiO_2$ et $Cr_2O_3$. Très préférentiellement ladite solution solide est sous une forme choisie parmi: $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ ou $Cr_{0.46}Ti_{0.54}O_{1.77}$.

La matrice de zircone comporte entre 0.5 et 13% en nombre de moles de $Sc_2O_3$ et/ou entre 0.1 et 0.9% en poids de $Al_2O_3$ et/ou $Cr_2O_3$.

On peut utiliser n'importe lequel de ces matériaux dans la formation de chacune des deux couches des couples de friction. Ils permettent tous d'avoir une meilleure résistance à l'humidité (eau, vapeur) et augmentent les performances des couples sur un domaine de températures plus élevées. On peut également utiliser un mélange de ces matériaux.

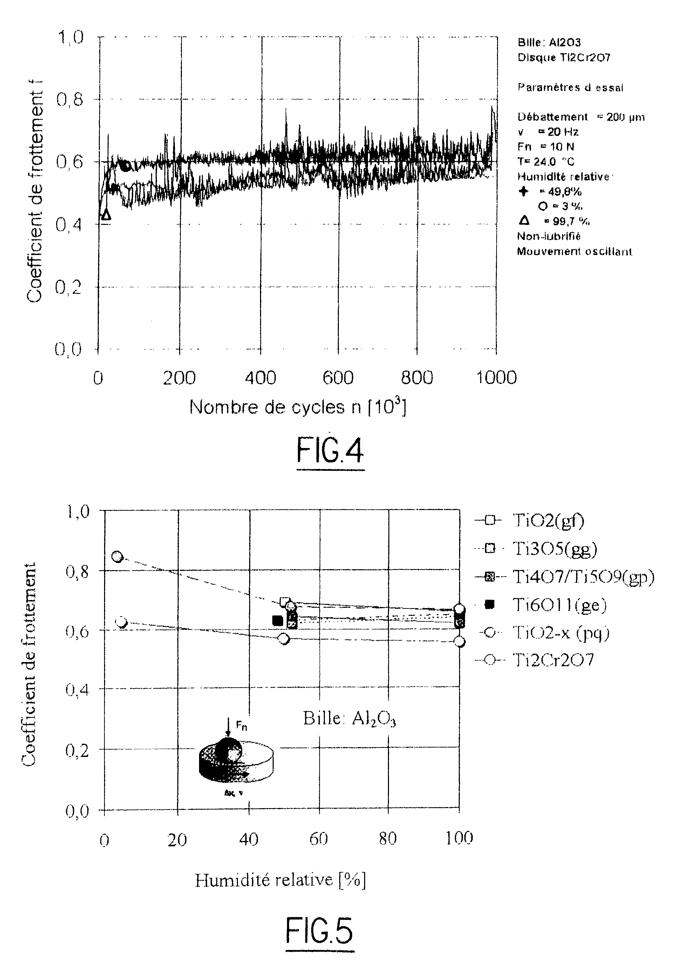

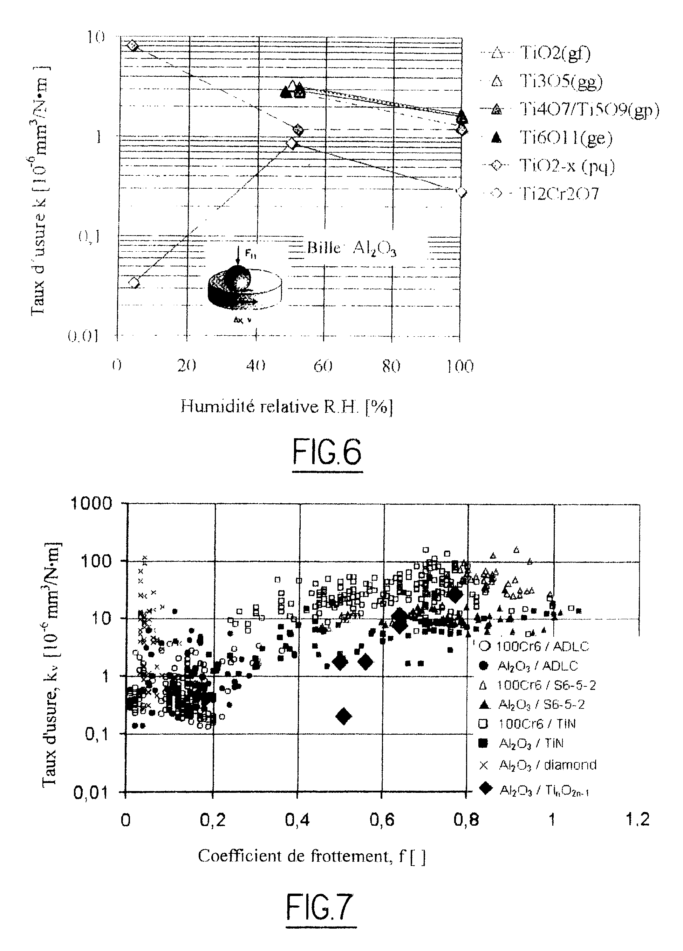

La figure 4 montre des valeurs des coefficients de frottement du couple alumine/$Ti_2Cr_2O_7$. Les coefficients de frottement sont représentés pour une humidité relative (HR) de 3% (courbe avec un cercle), 49.8% (courbe avec une croix) et 99.7% (courbe avec un triangle). Les COF sont plus élevés que ceux d'un couple alumine/diamant ou carbone hydrogéné (DLC - diamond like carbone) comme le montre la figure 7, bien que les taux d'usure du couple alumine/$Ti_2Cr_2O_7$ soient comparables à ceux d'un couple diamant/carbone hydrogéné. Les COF du couple alumine/$Ti_2Cr_2O_7$ sont quasiment indépendants de l'humidité et atteignent la valeur désirée de 0.6 sans usure adhésive et sont associés à des faibles taux d'usure.

La figure 5 représente les valeurs des coefficients de frottement sous différentes humidités relatives en mode d'oscillation non lubrifié après $10^6$ cycles, pour différents matériaux en phases magnéli et pour le $Ti_2Cr_2O_7$ selon l'invention (frottement contre l'alumine pour tous les matériaux). On constate que les COF des phases magnéli (non-altérées) sont supérieurs à ceux du $Ti_2Cr_2O_7$ (d'environ 0.1) mais le $Ti_2Cr_2O_7$ a un taux d'usure bien moins important, comme le montre la figure 6.

Le choix d'un matériau dans une application d'actionneur doit concilier et optimiser le frottement et l'usure. C'est pour cette raison que le $Ti_2Cr_2O_7$ est un bon matériau pour cette application.

DEPOT DES COUCHES

Les matériaux de friction sont déposés sur les pièces mécaniques du système destinées à coulisser les unes contre les autres.

Par ailleurs, la force de blocage est déterminée par le jeu entre la chemise et le piston actif. Ce jeu doit être assez petit pour permettre un contact entre la chemise et le piston une fois dilaté mais assez grand pour permettre au piston de coulisser une fois qu'il est allongé.

L'épaisseur des couches frictionnelles une fois usinées ne doit pas être plus grande que le jeu de blocage de l'actionneur. Elles doivent être toujours inférieures à 100 $\mu$m, préférentiellement inférieures à environ 4 à 6 $\mu$m dans l'état usiné.

Par conséquent, ces couches doivent définir des couches simples ou des multicouches minces. Elles sont donc déposées par des techniques qui peuvent être celles résumées dans le tableau 1 suivant. Il contient les désignations anglo-saxonnes de ces techniques généralement utilisées par l'homme de métier.

Tableau 1

| **Dépôt physique en phase gazeuse (PVD)** |
| --- |
| Radio frequency (RF) sputtering (bombardment) |
| Magnetron reactivity sputtering |
| Electron-beam directed vapor-deposition (EB-DVD) |
| (dépôt de phase vapeur par faisceau d'électrons) |
| **Dépôt chimique en phase gazeuse (CVD)** |
| PE-CVD (Plasma enhanced CVD) |
| LP-CVD (Low-pressure CVD) |
| **Dépôt en solution chimique** |

(suite)

| Sol-gel (solution-gelation) |
| MOD (Metallo-organic decomposition) |
| **Dépôt de métal fondu** |
| LPE (Liquid phase epitaxy) |
| **Revêtements chimiques** |
| **Oxydation anodique de titane** |
| **Revêtements électrochimiques de Ti, Al** |
| **Projection thermique** |

La température de la pièce pendant la déposition doit être égale à $T_{Curie}$ diminuée de 10 degrés Kelvin environ ; préférentiellement, on choisit une température de déposition égale à $T_{Curie}$ diminuée de 100 degrés Kelvin environ. Ce choix de températures évite l'endommagement des matériaux piézo-électriques.

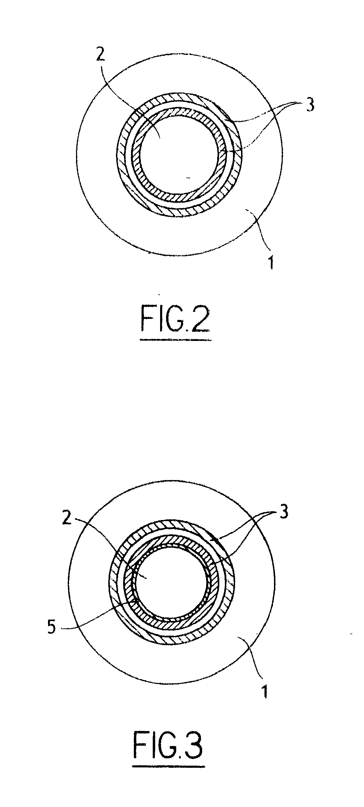

En outre, pour certaines combinaisons de couches frictionnelles et de substrats piézo-électriques, il peut être avantageux d'ajouter, comme le montre la figure 2, une couche intermédiaire 5 entre le matériau du piston actif et la couche frictionnelle pour améliorer l'adhésion de cette dernière.

En effet, les forces de cisaillement dues au blocage du piston dans sa chemise sont importantes. Par conséquent, selon les applications, cette force adhésive des couches sur leur support doit toujours pouvoir résister à un cisaillement de 5 MPa, préférentiellement un cisaillement supérieur à 20 MPa voire supérieur à 50 MPa.

Cette couche intermédiaire 5 peut être avantageusement constituée, par les éléments suivants pris seuls ou en une quelconque de leur combinaison (alliage) possible :

- Nickel ;
- Nickel avec une proportion en poids de 2 à 25% de phosphore ;
- Fer;
- Chrome ;
- Titane ;
- Silicium ou aluminium déposés par des procédés chimiques, électrochimiques CVD, projection thermique et/ou PVD.

On pourra de plus effectuer une segmentation radiale des couches après leur dépôt pour réduire les tensions dues à la dilatation thermique.

TOPOGRAPHIE DES COUCHES

La topographie des couches frictionnelles permet d'obtenir les propriétés de friction et la résistance à l'usure voulues.

Etant donné que les usures linéaires par triboélément sont préférentiellement inférieures à 2-3 $\mu$m, les états de surfaces initiaux des pièces mécaniques en coulissement doivent être ceux désirés dès la première sollicitation et réalisés pendant l'usinage. En effet, si le système fonctionne comme prévu, les états de surfaces avec les propriétés tribologiques sont quasiment invariants dans le temps. Il n'y a donc pas de rodage des pièces.

C'est pourquoi on effectue un traitement de surface pour obtenir dès la première application des couches dont la topographie de surface (répartition statistique et forme des micro-aspérités de la surface) correspond à ce que l'opérateur désire.

On rappelle que normalement, le piston actif travaille en blocage et ne glisse pas. Cependant, à cause de problèmes de vitesse d'actionnement ou de réglage entre les tronçons, il est possible que les aspérités soient sollicitées avec une composante de glissement sans glisser effectivement les unes contre les autres. C'est ce qu'on appelle le mode de «stick-slip » dans la terminologie anglo-saxonne généralement utilisée par l'homme de métier.

On cherche donc un état de surface permettant de réaliser des contacts sollicités élastiquement, i. e. sans usure traduite par des ruptures des contacts qui adhèrent (cas du « stick » selon la terminologie anglo-saxonne généralement utilisée) pour une élongation inférieure à 10 $\mu$m.

La topographie de la surface du piston et de la chemise représente un paramètre tout aussi important que le choix des matériaux de friction. Elle permet d'obtenir une sollicitation élastique des aspérités : les aspérités sollicitées élastiquement ne s'usent pas, de sorte que l'état de la surface reste donc quasiment identique pendant la durée de vie du système.

Classiquement, un état de surface est caractérisé par des valeurs de rugosité.

Il est ici proposé deux approches qui se distinguent de l'approche classique, mais qui traduisent, pour l'état de surface considéré, sensiblement la même caractéristique.

Selon une première approche, on contrôle l'état de surface de façon à ce que les rayons de courbures R des aspérités vérifient

$$0.005mm << R << 1mm.$$

et préférentiellement :

$$0.03mm < R < 0.1mm.$$

Pour une estimation du rayon de courbure d'aspérités d'une surface métallique donnée, on pourra avantageusement se référer à la publication suivante :

« Modélisation de la topographie microgéométrique - Matériaux et techniques » - n°3.-4 - 2000.

Le rayon de courbure des aspérités d'une surface céramique peut - si l'on considère que ces aspérités sont sphériques - être obtenu à partir d'une analyse de topographie par stylet.

On a en effet :

$$R = \frac{\pi R_a}{2\sigma_0 \sigma_4} = \frac{\pi}{2} \left( \frac{E^*}{H(T)} \right)' \frac{1}{\Psi^2} R_a$$

avec

$$\Psi = \sqrt{\sigma_0 \sigma_4} \frac{E^*}{H(T)} , \quad Ra = \frac{\sqrt{2}\sigma_0}{\sqrt{\pi}} \quad \text{et} \quad \frac{1}{E^*} = \frac{1 - v_1^2}{E_1} + \frac{1 - v_2^2}{E_2}$$

$\Psi$ étant égal à l'indice de plasticité
si $\Psi < 0.6$, le contact est élastique,
si $0.6 < \Psi < 1$, le contact est élasto-plastique,
si $\Psi > 1$, le contact est supposé être plastique.
$E^*$ étant le module d'Young équivalent,
$E_1$ et $E_2$ étant les modules d'Young des deux matériaux des couches de friction,
$v_1$ et $v_2$ étant leurs coefficients de Poisson,
$\sigma_0$ l'écart de distribution gaussienne de la hauteur des sommets d'aspérités (qui correspond à $R_q$ ou $R_{ms}$ selon la norme ISO 4287).
$\sigma_4$ l'écart de distribution gaussienne des courbes de profil (moment d'ordre 4) calculé à partir d'une différentiation numérique du profil de rugosité.

Généralement, pour les surfaces céramiques lisses, on choisit comme approche avantageusement R [mm] comme sensiblement égal à $5 \times 10^3$ à $5 \times 10^4$ fois $R_a$ [$\mu$m].

Dans une autre approche, où les aspérités sont modélisées par des cônes, on peut utiliser les valeurs :

$\Delta_a$ (gradient ou pente moyenne arithmétique du profil), ou
$\Delta_q$ (gradient ou pente moyenne quadratique du profil),
ces deux gradients ou pentes moyennes étant normalisé par la norme EN ISO 4287-98, avec :

$$\tan(\Delta_a, \Delta_q) \approx \sqrt{(\sigma 0. \sigma 4)} ,$$

pour faciliter l'état de surface désiré.

Notamment, on impose avantageusement un gradient vérifiant :

$$0\,005°<(\Lambda_a,\ ou\ \Lambda_q)<0.5°$$

De tels rayons de courbure ou de tels gradients sont préférés car ils définissent une forme des d'aspérités idéale pour une sollicitation élastique.

En parallèle à ce contrôle du rayon de courbure ou du gradient des aspérités, on contrôle la densité des aspérités en considérant un autre paramètre qui est la longueur d'onde moyenne des aspérités.

Il existe plusieurs paramètres de longueurs d'onde définies dans la norme EN ISO 4287. Ces longueurs d'onde sont $\lambda_a$ et $\lambda_q$, avec :

$$\lambda_a=2\pi R_a/\Lambda_a\ et\ \lambda_q=2\pi R_q/\Lambda_q.$$

($R_a$ correspondant à une rugosité DIN avec des hauteurs d'aspérités uniformes).

L'état de surface doit être tel que :

$$0.5\ \mu m<\lambda_a\ et\ \lambda_q<10\ \mu m.$$

Avantageusement à titre d'exemple, l'état de surface désiré peut être obtenu pour les matériaux céramiques avec une $R_a$ inférieure à 20 nm et préférentiellement inférieure à 10 nm.

Les couples frictionnels qui viennent d'être décrits sont avantageusement utilisés dans les actionneurs qui équipent des étriers de frein, et plus particulièrement des étriers de frein d'avions ou d'automobiles, ou les systèmes d'embrayage.

Les couches 3 de matériaux de friction, recouvrent totalement ou en partie la chemise ou le cylindre 1 et le piston 2.

On s'intéresse ci-après au choix du matériau de la chemise ou du cylindre 1 ainsi qu'à leur technique de fabrication.

Selon l'invention, le matériau de la chemise ou du cylindre 1 est un alliage de Al, de Fe et d'au moins un autre élément, l'alliage comportant au moins sensiblement 80% en poids d'Al et au moins entre 0.1 et 15.0% en poids de Fe.

L'ailiage de Al, de Fe et d'au moins un autre élément est choisi parmi :

- un alliage Al-Fe-V-Si, avec entre 0,1 et 15% en poids de Fe, entre 0,3 et 15% en poids de V, entre 0,1 et 5% en poids de Si, le reste étant du Al, l'alliage étant préférentiellement l'alliage AA 8009, à savoir Al-8,5Fe-1,3V-1,7Si ; et/ou
- un alliage Al-Fe-Ce, avec entre 0,1 et 15 % en poids de Fe, entre 0,1 et 9 % en poids de Ce, le reste étant du Al, l'alliage étant préférentiellement l'alliage Al-8,3Fe-4,0Ce et/ou Al-7,0Fe-6,0Ce ; et/ou
- un alliage Al-Fe-V, avec entre 0,1 et 15 % en poids de Fe, entre 0,1 et 5 % en poids de V, le reste étant du Al, l'alliage étant préférentiellement l'alliage Al-12Fe-3V ; et/ou
- un alliage Al-Fe-Mo, avec entre 0,1 et 15 % en poids de Fe, entre 0,3 et 9 % en poids de Mo, le reste étant du Al, l'alliage étant préférentiellement l'alliage Al-8Fe-2Mo ; et/ou
- un alliage Al-Fe-Cr-Ti, avec entre 0,5 et 10 % en atomes de Fe, entre 0,4 et 8% en atomes de Cr, entre 0,3 et 5% en atomes de Ti, le reste étant du Al, l'alliage étant préférentiellement l'alliage Al84,5Fe7Cr6,3Ti2,5 ;
- un alliage Al-Yb/Gd-TR, avec entre 1,0 et 20 % en poids de Yb ou de Gd, et entre 0,1 et 1,0 % en poids de terres rares, l'alliage étant préférentiellement l'alliage Al14Yb4Y.

L'homme du métier sait qu'il existe plusieurs procédés possibles de fabrication d'un alliage. Ainsi, il est possible de réaliser les alliages précités par solidification rapide ou atomisation suivie par un tréfilage, pour atteindre des résistances à la rupture à température ambiante jusqu'à 1 600 MPa avec des matrices en aluminium arnorphisées ou partiellement amorphisées (mélange crystallin-amorphe).

Cependant, ces procédés ne sont guère adaptés pour une fabrication de grands tonnages et une fabrication de pièces complexes nécessaires pour une application automobile ou aéronautique. De plus, la résistance à la rupture des alliages réalisés en solidification rapide diminue après un recuit et au-dessus d'une température de recristallisation, en générale supérieure à 300-350°C.

Il est proposé par la présente invention de réaliser le cylindre/chemise en alliage d'aluminium précité en coulée en gravité ou sous pression, suivi d'un dégazage sous vide et/ou dans un moule préchauffé entre 350-650°C. Ce procédé de fabrication peut être adapté à une fabrication de grands tonnages et une fabrication de pièces complexes nécessaires pour une application automobile ou aéronautique.

L'emploi des matériaux selon l'invention permet une fabrication plus simple et moins onéreuse des pièces de l'actionneur.

Un autre avantage de réaliser les pièces par coulée et que la pièce cylindre/chemise peut être monobloc ou former un substrat qui peut être revêtu. Ainsi, le fait que le cylindre/chemise est en une seule pièce favorise le transfert de chaleur vers cette pièce, qui est éloignée des matériaux actifs sensibles à la chaleur.

De façon préférentielle, les alliages en aluminium précités peuvent, juste avant la coulée, subir une étape d'affinage de grain et d'homogénéisation des grains en ajoutant dans l'alliage une quantité inférieure à 0,3 % en poids par rapport au poids total de la composition de Mg, Zr, Ce et/ou Sr (inoculation) et/ou une quantité inférieure à 0,05 % en poids de Nickel.

De même, juste avant la coulée, les alliages en aluminium précités peuvent subir une étape d'alliage avec du nitrure d'aluminium ou de silicium pour obtenir un alliage contenant jusqu'à 2% en poids d'azote. Les alliages forment ainsi des dispersoïdes en nitrure. L'étape d'alliage s'effectue sous une pression supérieure à 2 bar dans une atmosphère d'azote ou un mélange $N_2$/Ar, afin que l'azote reste dilué dans l'alliage liquide.

Pour une application dans un actionneur et en comparaison avec une fonte grise, ces alliages en aluminium modifiés montrent, même réalisés seulement en coulée et en coulée en bande mince, une bonne résistance à la rupture à chaud (T<500°C). Leur résistance à la rupture est en effet comparable à celle de la fonte grise avec 3,7% en poids de [C], à savoir $R^{500°C}_m$ ~ 100 MPa et $R^{500°C}_{0,02}$ ~ 40 MPa. De plus, il n'y a pas pour ces alliages de formation de phases liquides pour une température de fusion inférieure à 600°C, tel que c'est le cas pour les alliages Al-Si-Mg-Zn.

Les inventeurs ont aussi découvert que le module élastique de l'alliage Al84,5Fe7Cr6Ti2,5 réalisé en coulée en gravité présente un module d'Young E avec les valeurs

- à température ambiante $E^{RT}$ = 104,1 GPa ; et
- à 500°C $E^{500°C}$ = 83 GPa

comparables à une fonte grise avec 3,7% en poids de [C]. On constate que ces valeurs sont nettement supérieures (~44% à température ambiante) aux alliages en aluminium divulgués dans FR 2 844 933 (67-74 GPa des alliages Al-Si, Al-Mg, Al-Zn-Mg, Al-Cu par exemple).

Une coulée en gravité de Al8,5Fe1,3V1,7Si présente un module d'Young E avec les valeurs
- $E^{RT}$ = 85,7 GPa ; et
- $E^{500°C}$ = 65 GPa.

Ces résultats sont obtenus sans l'utilisation de particules, trichites ou fibres en céramiques.

Les alliages en aluminium modifiés dans une application d'actionneur présentent un gain intrinsèque en rigidité et en résistance à la rupture à chaud associés à une température opérationnelle allant jusqu'à 500°C. On comprend que cela représente un fort avantage technique (gain de poids notamment), mais également économique.

## Revendications

1. Actionneur comportant une chemise (1) de coulissement et un piston (2) qui comporte une pluralité de tronçons (4) en un matériau actif, des moyens de commande étant aptes à agir sur lesdits matériaux pour que les tronçons (4) se bloquent par rapport à la chemise (1) de coulissement ou s'allongent selon une séquence qui entraîne le déplacement axial du piston dans la chemise de coulissement, la chemise de coulissement et le piston présentant à leur interface au moins un couple de couches (3) de friction,
   **caractérisé en ce que** qu'au moins une couche de friction est en un matériau choisi parmi :

   - un oxyde d'un alliage de Ti et de Cr, l'oxyde étant sous forme d'une solution solide stabilisée et/ou sous forme d'une solution solide non-stoechiométrique ;
   - une matrice de zircone stabilisée par du $Sc_2O_3$ et/ou $Al_2O_3$ et/ou $Cr_2O_3$ :
   - un oxyde de zircone en phase tétragonale stabilisé par du $Y_2O_3$, la taille des grains de l'oxyde étant inférieure à 100 nm ; et/ou
   - une quelconque combinaison possible de ces matériaux.

2. Actionneur selon la revendication 1, dans lequel ledit couple de couches (3) de friction présente des coefficients de frottement statiques et dynamiques qui, pour une contrainte entre la chemise et le piston inférieure à 100 MPa, sont supérieurs à 0,6, ledit couple de couches de friction présentant en outre des états de surface tels que :

- leur rayon de courbure d'aspérités R vérifie

$$0.005 \text{ mm} << R << 1 \text{ mm,}$$

et
- les longueurs d'onde arithmétique moyenne $\lambda a$ et quadratique moyenne $\lambda q$ des aspérités vérifient

$$0.5 \text{ µm} < \lambda a \text{ et } \lambda q < 10 \text{ µm.}$$

3. Actionneur selon la revendication précédente, dans lequel au moins une couche de friction présente un état de surface dont le rayon de courbure R des aspérités vérifie :

$$0.03 \text{ mm} < R < 1 \text{mm.}$$

4. Actionneur selon l'une des revendications précédentes, dans lequel ledit couple de couches (3) de friction présente des coefficients de frottement statiques et dynamiques qui, pour une contrainte entre la chemise et le piston inférieure à 100 MPa, sont supérieurs à 0,6, ledit couple de couches de friction présentant en outre des états de surface tels que :

- le gradient arithmétique $\Delta a$ ou quadratique $\Delta q$ vérifient :

$$0.005° < (\Delta a, \text{ ou } \Delta q) < 0.5°,$$

et
- les longueurs d'onde arithmétique moyenne $\lambda a$ et quadratique moyenne $\lambda q$ des aspérités vérifient

$$0.5 \text{ µm} < \lambda a \text{ et } \lambda q < 10 \text{ µm.}$$

5. Actionneur selon l'une des revendications précédentes, dans lequel une couche (3) de friction a une épaisseur inférieure à 100 µm, et préférentiellement comprise entre 4 et 6 µm.

6. Actionneur selon l'une des revendications précédentes, dans lequel la solution solide stabilisée de l'oxyde de l'alliage de Ti et de Cr se présente sous la forme $Ti_{n-2}Cr_2O_{2n-1}$ avec $6 \leq n \leq 9$.

7. Actionneur selon l'une des revendications précédentes, dans lequel la forme non-stoechiométrique de l'oxyde de l'alliage de Ti et de Cr se présente sous la forme d'une solution solide de $TiO_2$ et $Cr_2O_3$, préférentiellement sous une forme choisie parmi : $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ ou $Cr_{0.46}Ti_{0.54}O_{1.77}$,

8. Actionneur selon l'une des revendications précédentes, dans lequel la matrice de zircone comporte entre 0.5 et 13% en nombre de moles de $Sc_2O_3$ et/ou entre 0.1 et 0.9% en poids de $Al_2O_3$ et/ou $Cr_2O_3$.

9. Actionneur selon l'une des revendications précédentes, dans lequel la chemise de coulissement est en alliage de Al, de Fe et d'au moins un autre élément, l'alliage comportant au moins sensiblement 80% en poids d'Al et au moins entre 0.1 et 15.0% en poids de Fe.

10. Actionneur selon la revendication précédente, dans lequel l'alliage de Al, de Fe et d'au moins un autre élément est choisi parmi :

- un alliage Al-Fe-V-Si, avec entre 0,1 et 15% en poids de Fe, entre 0,3 et 15% en poids de V, entre 0,1 et 5% en poids de Si, le reste étant du Al, l'alliage étant préférentiellement l'alliage AA 8009, à savoir Al-8,5Fe-1,3V-1,7Si ; et/ou
- un alliage Al-Fe-Ce, avec entre 0,1 et 15 % en poids de Fe, entre 0,1 et 9 % en poids de Ce, le reste étant du Al, l'alliage étant préférentiellement l'alliage Al-8,3Fe-4,0Ce et/ou Al-7,0Fe-6,0Ce ; et/ou
- un alliage Al-Fe-V, avec entre 0,1 et 15 % en poids de Fe, entre 0,1 et 5 % en poids de V, le reste étant du Al, l'alliage étant préférentiellement l'alliage Al-12Fe-3V ; et/ou
- un alliage Al-Fe-Mo, avec entre 0,1 et 15 % en poids de Fe, entre 0,3 et 9 % en poids de Mo, le reste étant du Al, l'alliage étant préférentiellement l'alliage AE-8Fe-2Mo ; et/ou
- un alliage Al-Fe-Cr-Ti, avec entre 0,5 et 10 % en atomes de Fe, entre 0,4 et 8% en atomes de Cr, entre 0,3 et 5% en atomes de Ti, le reste étant du Al, l'alliage étant préférentiellement l'alliage Al84,5Fe7Cr6,3Ti2,5.

11. Actionneur selon l'une des deux revendications précédentes, dans lequel l'alliage présente des grains affinés et homogénéisés et comporte une quantité inférieure à 0,3 % en poids par rapport au poids total de l'alliage de Mg, Zr, Ce et/ou Sr (inoculation) et/ou une quantité inférieure à 0,05 % en poids de Ni.

12. Actionneur selon l'une des revendications 9 ou 10, dans lequel l'alliage comporte du nitrure d'aluminium ou de silicium pour obtenir un alliage contenant jusqu'à 2% en poids d'azote.

**Claims**

1. Actuator comprising a slip liner (1) and a piston (2), said piston comprising a plurality of sections (4) made of an active material, control means being designed to act on said materials so that the sections (4) become blocked relative to the slip liner (1) or become extended in a sequence that causes axial displacement of the piston in the slip liner, the slip liner and the piston having at their interface at least one pair of friction layers (3), **characterized in that** at least one friction layer is made of a material chosen from:

   - an oxide of a Ti-Cr alloy, the oxide being in the form of a stabilized solid solution and/or in the form of a non-stoichiometric solid solution;
   - an $Sc_2O_3$ and/or $Al_2O_3$ and/or $Cr_2O_3$-stabilized zirconia matrix;
   - an oxide of $Y_2O_3$-stabilized zirconia in tetragonal phase, the size of the oxide grains being less than 100 nm; and/or
   - any possible combination of these materials.

2. Actuator according to Claim 1, in which said pair of friction layers (3) has static and dynamic friction coefficients which, for a stress of less than 100 MPa between the liner and the piston, are greater than 0.6, said pair of friction layers furthermore having surface finishes such that:

   - the radius of curvature R of their asperities satisfies:

$$0.005 \text{ mm} << R << 1 \text{ mm};$$

   and
   - the arithmetic mean wavelength $\lambda_a$ and the root mean square wavelength $\lambda_q$ of the asperities satisfy:

$$0.5 \text{ μm} < \lambda_a \text{ and } \lambda_q < 10 \text{ μm}.$$

3. Actuator according to the preceding claim, in which at least one friction layer has a surface finish in which the radius of curvature R of the asperities satisfies:

$$0.03 \ \text{mm} \ < \ R \ < \ 1 \ \text{mm}.$$

4. Actuator according to one of the preceding claims, in which said pair of friction layers (3) has static and dynamic friction coefficients which, for a stress of less than 100 MPa between the liner and the piston, are greater than 0.6, said pair of friction layers furthermore having surface finishes such that:

- the arithmetic gradient $\Delta_a$ or root mean square gradient $\Delta_{rms}$ satisfies:

$$0.005° \ < \ (\Delta_a \ \text{or} \ \Delta_q) \ < \ 0.5°;$$

and
- the arithmetic mean wavelength $\lambda_a$ and the root mean square wavelength $\lambda_{rms}$ of the asperities satisfy:

$$0.5 \ \mu\text{m} \ < \ \lambda_a \ \text{and} \ \lambda_q \ < \ 10 \ \mu\text{m}.$$

5. Actuator according to one of the preceding claims, in which a friction layer (3) has a thickness of less than 100 $\mu$m and preferably between 4 and 6 $\mu$m.

6. Actuator according to one of the preceding claims, in which the stabilized solid solution of the oxide of the Ti-Cr alloy is in the form $Ti_{n-2}Cr_2O_{2n-1}$ where $6 \le n \le 9$.

7. Actuator according to one of the preceding claims, in which the non-stoichiometric form of the oxide of the Ti-Cr alloy is in the form of a solid solution of $TiO_2$ and $Cr_2O_3$, preferably in a form chosen from: $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0.12}Ti_{0.78}O_{1.74}$, $Cr_{0.222}Ti_{0.778}O_{1.889}$, $Cr_{0.286}Ti_{0.714}O_{1.857}$ or $Cr_{0.46}Ti_{0.54}O_{1.77}$.

8. Actuator according to one of the preceding claims, in which the zirconia matrix contains between 0.5 and 13 mol% $Sc_2O_3$ and/or between 0.1 and 0.9% $Al_2O_3$ and/or $Cr_2O_3$ by weight.

9. Actuator according to one of the preceding claims, in which the slip liner is made of an alloy of Al, Fe and at least one other element, the alloy comprising at least substantially 80% Al by weight and at least between 0.1 and 15.0% Fe by weight.

10. Actuator according to the preceding claim, in which the alloy of Al, Fe and at least one other element is chosen from:

- an Al-Fe-V-Si alloy, with between 0.1 and 15% Fe by weight, between 0.3 and 15% V by weight and between 0.1 and 5% Si by weight, the balance being Al, the alloy preferably being the alloy AA 8009, namely Al-8.5Fe-1.3V-1.7Si; and/or
- an Al-Fe-Ce alloy, with between 0.1 and 15% Fe by weight and between 0.1 and 9% Ce by weight, the balance being Al, the alloy preferably being the alloy Al-8.3Fe-4.0Ce and/or Al-7.0Fe-6.0Ce; and/or
- an Al-Fe-V alloy, with between 0.1 and 15% Fe by weight and between 0.1 and 5% V by weight, the balance being Al, the alloy being preferably the alloy Al-12Fe-3V; and/or
- an Al-Fe-Mo alloy, with between 0.1 and 15% Fe by weight and between 0.3 and 9% Mo by weight, the balance being Al, the alloy being preferably the alloy Al-8Fe-2Mo; and/or
- an Al-Fe-Cr-Ti alloy, with between 0.5 and 10 at% Fe, between 0.4 and 8 at% Cr and between 0.3 and 5 at% Ti, the balance being Al, the alloy preferably being the alloy 84.5Al-7Fe-6.3Cr-2.5Ti.

11. Actuator according to either of the two preceding claims, in which the alloy has refined and homogenized grains and contains an amount of Mg, Zr, Ce and/or Sr (inoculation) of less than 0.3% by weight relative to the total weight of the alloy and/or an amount of Ni of less than 0.05% by weight.

12. Actuator according to either of Claims 9 and 10, in which the alloy includes silicon nitride or aluminium nitride in order to obtain an alloy containing up to 2% nitrogen by weight.

**Patentansprüche**

1. Aktuator, der einen Gleitmantel (1) und einen Kolben (2) umfasst, welcher eine Mehrzahl von Abschnitten (4) aus einem aktiven Material, Antriebsmittel umfasst, die geeignet sind, auf die Materialien so einzuwirken, dass die Abschnitte (4) sich mit Bezug auf den Gleitmantel (1) verklemmen oder sich gemäß einer Sequenz ausdehnen, welche die axiale Versetzung des Kolbens in dem Gleitmantel antreibt, wobei der Gleitmantel und der Kolben an ihrer Grenzfläche mindestens ein Paar Reibungsschichten (3) aufweisen,
   **dadurch gekennzeichnet, dass** mindestens eine Reibungsschicht aus einem Material ist, das ausgewählt ist aus:

   - einem Oxid einer Legierung von Ti und Cr, wobei das Oxid in Form einer stabilisierten festen Lösung und/ oder in Form einer festen nicht-stöchiometrischen Lösung vorliegt;
   - eine Zirconiumdioxidmatrix, die durch $Sc_2O_3$ und/oder $Al_2O_3$ und/oder $Cr_2O_3$ stabilisiert ist,
   - ein Oxid von Zirconiumdioxid in tetragonaler Phase, das durch $Y_2O_3$ stabilisiert ist, wobei die Korngröße des Oxids unter 100 nm liegt; und/oder
   - irgendeiner möglichen Kombination dieser Materialien.

2. Aktuator nach Anspruch 1, bei dem das Paar Reibungsschichten (3) statische und dynamische Reibungskoeffizienten aufweist, die bei einer Spannung zwischen dem Mantel und dem Kolben von weniger als 100 MPa über 0,6 liegen, wobei das Paar Reibungsschichten darüber hinaus Oberflächenzustände aufweist, wie:

   - ihr Kurvenradius der Rauheit R genügt 0,005 mm<<R<<1 mm und
   - die Längen der mittleren arithmetischen Welle $\lambda a$ und der quadratischen mittleren Welle $\lambda q$ der Rauheit genügt 0,5 $\mu m < \lambda a$ und $\lambda q < 10$ $\mu m$.

3. Aktuator nach dem vorangehenden Anspruch, bei dem mindestens eine Reibungsschicht einen Oberflächenzustand aufweist, deren Kurvenradius R der Rauheit genügt: 0,03 mm<R<1mm.

4. Aktuator nach irgendeinem der vorangehenden Ansprüche, bei dem das Paar Reibungsschichten (3) statische und dynamische Reibungskoeffizienten aufweist, die bei einer Spannung zwischen dem Mantel und dem Kolben von weniger als 100 MPa über 0,6 liegen, wobei das Paar Reibungsschichten darüber hinaus Oberflächenzustände aufweist, wie:

   - der arithmetische Gradient $\Delta a$ oder der quadratische Gradient $\Delta q$ genügen:

$$0,005° < (\Delta a \text{ oder } \Delta q) < 0,5°$$

   und
   - die Längen der mittleren arithmetischen Welle $\lambda a$ und mittleren quadratischen Welle $\lambda q$ der Rauheit genügen:

$$0,5 \text{ } \mu m < \lambda a \text{ und } \lambda q < 10 \text{ } \mu m.$$

5. Aktuator nach irgendeinem der vorangehenden Ansprüche, bei dem eine Reibungsschicht (3) eine Dicke unter 100 $\mu m$ aufweist und vorzugsweise zwischen 4 und 6 $\mu m$ einschließlich liegt.

6. Aktuator nach einem der vorangehenden Ansprüche, bei dem die stabilisierte feste Lösung des Oxids der Legierung von Ti und Cr in Form von $Ti_{n-2}Cr_2O_{2n-1}$ mit $6 \leq n \leq 9$ vorliegt.

7. Aktuator nach irgendeinem der vorangehenden Ansprüche, bei dem die nicht-stöchiometrische Form des Oxids der Legierung von Ti und Cr in Form einer festen Lösung von $TiO_2$ und $Cr_2O_3$ vorliegt, bevorzugt in einer Form, die ausgewählt ist aus: $Cr_2Ti_2O_7$, $Ti_6Cr_2O_{15}$, $Ti_7Cr_2O_{17}$, $Cr_2Ti_8O_1$, $Cr_2Ti_5O_{13}$, $Cr_2Ti_4O_{11}$, $Cr_{0,12}Ti_{0,78}O_{1,74}$, $Cr_{0,222}Ti_{0,778}O_{1,889}$, $Cr_{0,286}Ti_{0,714}O_{1,857}$ oder $Cr_{0,46}Ti_{0,54}O_{1,77}$.

**8.** Aktuator nach einem der vorangehenden Ansprüche, bei dem die Zirconiumdioxid-Matrix zwischen 0,5 und 13 Mol-% an $Sc_2O_3$ und/oder zwischen 0,1 und 0,9 Gew.-% $Al_2O_3$ und/oder $Cr_2O_3$ umfasst.

**9.** Aktuator nach einem der vorangehenden Ansprüche, bei dem der Gleitmantel aus einer Legierung von Al, Fe und mindestens einem anderen Element ist, wobei die Legierung mindestens etwa 80 Gew.-% Al und mindestens zwischen 0,1 und 15,0 Gew.-% Fe umfasst.

**10.** Aktuator nach dem vorangehenden Anspruch, bei dem die Legierung aus Al, Fe und mindestens einem anderen Element ausgewählt ist aus:

- einer Legierung Al-Fe-V-Si mit zwischen 0,1 und 15 Gew.-% Fe, zwischen 0,3 und 15 Gew.-% V, zwischen 0,1 und 5 Gew.-% Si, wobei der Rest Al ist, wobei die Legierung bevorzugt die Legierung AA 8009 ist, das heißt Al-8,5Fe-1,3V-1,7Si; und/oder
- einer Legierung Al-Fe-Ce mit zwischen 0,1 und 15 Gew.-% Fe, zwischen 0,1 und 9 Gew.-% Ce, wobei der Rest Al ist, wobei die Legierung vorzugsweise die Legierung Al-8,3Fe-4,0Ce und/oder Al-7,0Fe-6,0Ce ist; und/oder
- einer Legierung Al-Fe-V mit zwischen 0,1 und 15 Gew.-% Fe, zwischen 0,1 und 5 Gew.-% V, wobei der Rest Al ist, wobei die Legierung vorzugsweise die Legierung Al-12Fe-3V ist; und/oder
- einer Legierung Al-Fe-Mo mit zwischen 0,1 und 15 Gew.-% Fe, zwischen 0,3 und 9 Gew.-% Mo, wobei der Rest Al ist, wobei die Legierung bevorzugt die Legierung Al-8Fe-2Mo ist; und/oder
- einer Legierung Al-Fe-Cr-Ti mit zwischen 0,5 und 10 Atom-% Fe, zwischen 0,4 und 8 Atom-% Cr, zwischen 0,3 und 5 Atom-% Ti, wobei der Rest Al ist, wobei die Legierung vorzugsweise die Legierung Al84,5Fe7Cr6,3Ti2,5 ist.

**11.** Aktuator nach einem der zwei vorangehenden Ansprüche, bei dem die Legierung feine und homogenisierte Körner aufweist und eine Menge von weniger als 0,3 Gew.-%, bezogen auf das Gesamtgewicht der Legierung, an Mg, Zr, Ce und/oder Sr (Impfung) und/oder eine Menge unter 0,05 Gew.-% Ni umfasst.

**12.** Aktuator nach einem der Ansprüche 9 oder 10, bei dem die Legierung Aluminium- oder Siliciumnitrid umfasst, um eine Legierung zu erhalten, die bis zu 2 Gew.-% Stickstoff enthält.

FIG.1

FIG.2

FIG.3

**Bille**: Al2O3
**Disque** Ti2Cr2O7

**Paramètres d essai**

Débattement = 200 μm
v = 20 Hz
Fn = 10 N
T = 24,0 °C
Humidité relative
✦ = 49,8%
O = 3 %,
Δ = 99,7 %,
Non-lubrifié
Mouvement oscillant

FIG.4

-□- TiO2(gf)
-□- Ti3O5(gg)
-▨- Ti4O7/Ti5O9(gp)
■ Ti6O11(ge)
-O- TiO2-x (pq)
-O- Ti2Cr2O7

Bille: Al₂O₃

FIG.5

FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2702895
- FR 2819650

- FR 2800028
- FR 2844933